# EUROPÄISCHE PATENTANMELDUNG

(11) **EP 2 796 672 A1**
(43) Veröffentlichungstag der Anmeldung: **29.10.2014**
(21) Anmeldenummer: 13165480.8
(22) Anmeldetag: 26.04.2013
(51) Int. Cl.: F01K 3/18, F22B 1/18, F24J 1/00

(54) **Erzeugung von thermischer Energie und Kohlenmonoxid durch aluminothermische Reduktion von Kohlendioxid**

(71) Anmelder: Evonik Industries AG, 45128 Essen (DE)
(72) Erfinder: Windhab, Norbert, Dr., 65719 Hofheim (DE); Dentler, Carsten, 61350 Bad Homburg (DE); Marx, Achim, Dr., 63571 Gelnhausen (DE); Schulz, Thomas, 63584 Gründau (DE); Kunz, Franz Rudolf, 63571 Gelnhausen (DE); Appel, Holger, 65830 Kriftel (DE)

(57) **Zusammenfassung**

Die Erfindung betrifft ein Verfahren zur Erzeugung von thermischer Energie und Kohlenmonoxid (CO) durch aluminothermische Reduktion von Kohlendioxid, dadurch gekennzeichnet, dass Aluminium (Al) und Kohlendioxid (CO₂) in einem Brennofen im Wesentlichen ohne Zufuhr von Sauerstoffgas durch Zuführung von Zündenergie zur Reaktion gebracht werden und zu Korund (Al₂O₃)und Kohlenmonooxid (CO) verbrannt werden. Die Erfindung betrifft weiterhin die Verwendung von Aluminium im erfindungsgemäßen Verfahren, sowie einen Brennofen und ein Kraftwerk.

## Beschreibung

### Gebiet der Erfindung

Die Erfindung betrifft ein Verfahren zur Erzeugung von thermischer Energie durch aluminothermische Reduktion von Kohlendioxid, sowie einen für das Verfahren geeigneten Brennofen und ein Kraftwerk.

### Stand der Technik

DE 102009043169A1 beschreibt ein emissionsfreies Dampfkraftwerk, welches auf der Basis einer Eisenoxid-Aluminium-Reaktion betrieben werden soll.

### Aufgabe und Lösung

Biotechnologische Produktionsverfahren haben gegenüber chemischen Ansätzen den Vorteil, dass bei geringen Temperaturen und Drücken gearbeitet wird. In der chemischen Industrie kommen vermehrt biotechnologische Verfahren zum Einsatz und haben einer äußerst positiven Einfluss auf die Nachhaltigkeit der Chemischen Industrie. Die gesellschaftliche Akzeptanz der biotechnologischen Produktionsprozesse ist in den letzten Jahren stark gestiegen und zukünftige Optimierungspotentiale der neuen Verfahren werden diesen Trend verstärken.

Biotechnologische Verfahren der ersten Generation sind zumeist Zucker-basiert. Verfahren der zweiten Generation streben die Nutzung von Biomasse an. Sowohl Verfahren der ersten als auch der zweiten Generation haben den Nachteil einer geringen Rohstoffflexibilität. Daher wurden in jüngster Vergangenheit vermehrt Wertschöpfungsketten entwickelt, bei denen zunächst die Biomasse mit thermochemischen Prozessen zu CO vergast wird. In diesem Prozess können die unterschiedlichsten Biomassequalitäten (Stroh, Holz, organischer Stadtabfall) eingesetzt werden. In einem zweiten Schritt wird das so entstandene CO mittels biotechnologischer Verfahren zu Wertstoffen für die Chemische Industrie umgesetzt.

Diese wiederum dienen als Ausgangsstoffe für die Produktion von nachhaltigen Treibstoffen, Massen-/Spezial-/Feinchemikalien sowie von Materialien. Ein besonderer Vorteil der beschriebenen Wertschöpfungsketten ist die Option, dem biogenen CO nicht-biogene CO Teilströme beimischen zu können. Diese nichtbiogenen CO Teilströme werden aus Erdgas, Abgasen der Stahl-/Zementindustrie sowie Kohle gewonnen. Damit wird die Rohstoffflexibilität erhöht.

Die in jüngster Zeit entwickelten biotechnologischen Verfahren, bei denen CO als Kohlenstoff- und Energiequelle fungieren kann, sind in zahlreichen Patenten und Kommerzialisierungsbeispielen beschrieben. Wichtige Technologieanbieter sind BRAIN, Coskata, Genomatica, IneosBio und LanzaTech. Partnerschaften dieser Technologieanbieter mit Akteuren der Wirtschaftsbereiche Erdgas, Stahl, Zement, Stadtabfall, Chemie, Energie, Agrar, Forst sowie Kohle sind bekannt. Es besteht großes Interesse der Automobil- und Luftfahrtindustrie an nachhaltig produzierten Treibstoffen. Damit ist gewährleistet, dass eine großvolumige Abnahme sichergestellt ist. Alleine die Luftfahrtindustrie benötigt global mehr als 260 Mio Tonnen Kerosin pro Jahr. In der Chemischen Industrie könnten große Teile der globalen Weltproduktion mit den beschriebenen Wertschöpfungsketten produziert werden.

Eine wesentliche Hürde für eine globale kommerzielle Nutzung der beschriebenen Wertschöpfungsketten ist eine unzureichende Bereitstellung von CO, welches nachhaltig (ökonomisch, ökologisch, sozial), großvolumig und dezentral produziert werden muss. Mit der vorliegenden Erfindung wird ein wichtiger Beitrag zur Lösung dieses Problems beschrieben. Insbesondere die preiswerte und dezentrale Bereitstellung von CO wird ermöglicht. Eine dezentrale CO Versorgung ermöglicht die volle Nutzung der Vorteile von biotechnologischen Produktionsverfahren. Biotechnologische Produktionsverfahren können im Vergleich zu chemischen Prozessen in vielen Fällen auch in kleinerem Maßstab betrieben werden. Economyof-Scale ist bei biotechnologischen Produktionsverfahren weniger zwingend. Damit können bei einer typischen Anlagenkapazität von 100 Tausend Tonnen pro Jahr Chemikalien mit hoher Wertschöpfung hergestellt werden. Es eröffnen sich vielfältige Möglichkeiten für die Etablierung neuer Wertschöpfungsketten, die wiederum Grundlage für die Schaffung von Beschäftigung und Bruttosozialprodukt sind. Damit können wichtige Antworten auf wesentliche betriebs-/volkswirtschaftliche Herausforderungen gegeben werden.

Die Akkumulation von Kohlendioxid (CO₂) in der Erdatmosphäre führt zum unerwünschten Treibhauseffekt. Aufgrund der Abkehr von der CO₂-neutralen Kernenergie ist damit zu rechnen, dass insbesondere Kohlekraftwerke zur Energieversorgung in einer Übergangszeit genutzt werden müssen, um den industriellen und privaten Energiebedarf zu befriedigen. CO₂ neutrale erneuerbare Energiequellen wie Wind- oder Sonnenkraft stehen im Moment noch nicht in ausreichendem Maße zu Verfügung. Das durch Kohlekraftwerke vermehrt ausgestoßene CO₂ kann in sogenannten Carbon-Capture-Verfahren komprimiert und gelagert werden, so dass es der Atmosphäre entzogen wird. Die Kompression und Lagerung von CO₂ führt jedoch zu neuen Problemen.

Es besteht daher ein Bedarf an Verfahren und Verwendungen, in denen der vermehrte CO₂-Anfall einem volkswirtschaftlich sinnvollen Verbrauchsprozess zugeführt werden kann. CO₂ kann zwar direkt im Boudouard-Gleichgewicht zu Kohlenmonoxid (CO) umgewandelt werden, was im Hochofenprozess an glühender Kohle und zur Generatorgasherstellung Verwendung findet, wenn als Reduktionsmittel Kohle zur Verfügung stehen. Diese Reaktion ist stark endotherm d.h. sie hat einen erheblichen Energiebedarf, da das Gleichgewicht durch hohe Temperaturen und niedrige Drücke zum Kohlenmonoxid hin "verschoben" werden muss (Kohlenmonoxid ist bei Raumtemperatur metastabil).

Der Erfindung liegt die Erkenntnis zugrunde, dass sich Aluminium in besonderem Maße als Energieträger eignet und darüber hinaus zur Umwandlung von CO₂ zu Kohlenmonoxid (CO) eingesetzt werden kann. Die Umsetzung von Korund mit Graphit-(Kohlenstoff)-Elektrolyse zur Erzeugung von Aluminium ist bekannt. Es war jedoch nicht vorhersehbar, dass die umgekehrte Reaktion technisch handhabbar sein würde.

Zur Lösung der oben geschilderten Aufgabe wird daher ein Verfahren zur Erzeugung von thermischer Energie und Kohlenmonoxid (CO) durch aluminothermische Reduktion von Kohlendioxid, dadurch gekennzeichnet, dass Aluminium (Al) und Kohlendioxid (CO₂) in einem Brennofen im Wesentlichen ohne Zufuhr von Sauerstoffgas durch Zuführung von Zündenergie zur Reaktion gebracht werden und zu Korund (Al₂O₃)und Kohlenmonooxid (CO) verbrannt werden, vorgeschlagen.

Aluminium ist innert und steht in großen Mengen zur Verfügung. Aluminium wird z. B. in der Luftfahrt und Kraftfahrzeugindustrie verwendet. Alumiumabfälle können recycliert werden.

Das Verfahren beschreibt somit auch die Herstellung von Korund und Kohlenmonoxid aus Aluminium und Kohlendioxid. Die Anwendung des Verfahrens macht energiepolitisch insbesondere Sinn zu Zeitpunkten, in denen ein besonders hoher industrieller und/oder privater Energiebedarf ansteht und den vermehrten Einsatz von Kohlekraftwerken oder andere CO2-emittierenden Energielieferanten notwendig macht, um sogenannte Energiespitzen zu befriedigen oder um Energie und CO₂-Spitzen zu glätten, was ökonomisch und technisch einer Effizienzsteigerung des Energie-und Materialkreislaufs darstellt, der in Summe bei wachsenden Ökonomien wächst, aber im Sinne der Kompartimentierung (Biosphäre, Lagerstätte-Handelsumschlag und Atmosphäre) und Speicherung ökologisch und technisch unbedenklich, sicher und zugriffsschnell verteilt werden soll. Denn effiziente Energiewirtschaft sucht die Vermeidung von Verarmung und Überschuss (örtlich) und Verbraucher-Spitzen und Überangebot (zeitlich), die man im offenen Markt als Preisverhalten messen kann d.h. auch von logistisch dezentraler Verknüpfungen zwischen stofflichen (z. B. Rohstoffe und Funktions-Materialien) und energetischen Speichern und Verbrauchern. Die Hauptquelle solcher dezentraler Energiegewinnung bis hin zur mobilen Traktion (Transportindustrien wie Strassen-Schienenverkehr und besonders auch Luftfahrt) sind Kohlewasserstoffverbrennung, Abfall- Bio-Gas, Gas- und Kohlekraftwerke. Die zyklische Rückgewinnung und beliebige momentane Nutzung ist neben der dezentralen Umweltfreundlichkeit ökonomisch bei den Spitzenkurven durch Überangebot der Windkraftanlagen in Atomausstiegszenarien immer entscheidender und technisch immer schwieriger. Es wurde überraschend gefunden, dass durch die Erfindungsgemäße Herrichtung zwei der wichtigsten Stoffströme, Material- und Energie-Äquivalente in diesem ökonomischen Sinne besonders technisch gut verknüpft werden können. Chemisch verknüpfen wir das Alumino-Elektrische Haupin-Diagramm mit dem Boudoir-Gleichgewicht in besonders geeigneter Weise und beschreiben wie an beliebigem Ort mit üblicher Reingastechnik eine effiziente thermische Energiegewinnung bei gleichzeitiger Herstellung des z. B. Traktionsenergie-Äquivalents CO entsteht. Das Haupin-Diagramm beschreibt im Detail, wie die Aluminium-Schmelze technisch Graphit oxidiert, damit wird die Halbzellenpotentialdifferenz optimiert, was ein Verlustwärmeffizienz-Optimierungskompromiss darstellt, somit ist CO₂ eines der Produkte!.

Die CO-Ökonomierealität und-Visionen ist hinreichend beschrieben, beliebige chemischen Stoffstränge sind heute damit technisch erreichbar und als Flüssig-Traktions- und besonders nicht ersetzbarem flüssigen Flugenergie-Äquivalenz sind viele der auch biotechnologischen oder regenerierbaren Stoffumwandlungen und Katalysen beschrieben. Der klassische Sammelbegriff ist dabei das Fischer-Tropsch-Verfahren, in dem Kohlenmonoxid-Wasserstoff-Gemische an Katalysatoren umgewandelt werden.

Aluminium ist einer der größten klassischen Materialreserven, alle Metallbauteile eines Fahrzeugs können daraus erzeugt werden, nicht aber aus Kunststoff. CO wiederum gibt mit Elektron-, Zucker- oder Wasserstoff-Äquivalenten Zugang zur klassischen Polymer- und Synthesechemieverwertung. Die Umsetzung 4 Al + 6 CO₂ ergibt dabei 2 Al₂O₃ + 6CO in exothermer Reaktion. Aus dem anfallenden Korund (Al₂O₃) - ein ebenfalls hervorragend umweltsicheres und inertes Produkt kann durch Elektrolyse wieder Aluminium gewonnen werden.

Zur Lösung der oben geschilderten Aufgabe wird weiterhin die Verwendung von Kohlenmonoxid, welches im oben genannten Verfahren aus Aluminium und Kohlendioxid gewonnen wurde, zur Herstellung von energiereichen Hydrocarbonverbindungen vorgeschlagen.

Weiterhin wird ein Brennofen und ein Kraftwerk zur Herstellung von Korund und Kohlenmonoxid aus Aluminium und Kohlendioxid vorgeschlagen. Vorteilhaft werden Kleinkraftwerke bei Bedarf durch solche Korund-Brennkammern umgerüstet oder flexibel umgestaltet (on demand).

Kraftwerke können miniaturisiert werden und aus verschiedenen CO₂-Quellen den "Treibstoff" gewinnen. Eine Art sind mobile Kraftwerke z. B. Im Fahrzeug- Schiffs - oder Schienenverkehr, andere sind sehr kleine Bauformen, gekennzeichnet durch Aluminiumbrennkammer, CO₂-Reservoir und Stromerzeuger z. B. an Temperaturgradienten wie Peltier-Elementen.

Beliebige technische Inert- und Betriebsgasgemische können den Reaktor und die Reaktion steuern, wie etwa die Zuführung von Sauerstoffgas zur Grund-, Start- oder Zuheizung und Quencher-Kohlenwasserstoffe usw..

### Beschreibung der Erfindung

Die Erfindung betrifft ein Verfahren zur Erzeugung von thermischer Energie und Kohlenmonoxid (CO) durch aluminothermische Reduktion von Kohlendioxid, dadurch gekennzeichnet, dass Aluminium (Al) und Kohlendioxid (CO₂) in einem Brennofen im Wesentlichen ohne Zufuhr von Sauerstoffgas durch Zuführung von Zündenergie zur Reaktion gebracht werden und zu Korund (Al₂O₃)und Kohlenmonooxid (CO) verbrannt werden.

Das Verfahren ist dadurch gekennzeichnet, dass die stöchiometrischen Verhältnisse der Verbrennungsreaktion 4 Al + 6 CO₂ zu 2 Al₂O₃ + 6CO betragen.

Die Zündenergie in Form von Wärme kann bevorzugt zumindest lokal mit mindestens 600, mit mindestens 800mit mindestens 1000, mindestens 1050, mindestens 1080, mindestens 1100 mindestens 1120 mindestens 1150 mindestens 1180 mindestens 1200 °C zugeführt werden. Die Zündenergie in Form von Wärme kann von 600 bis 1400, 800 bis 1350, 1050 bis 1300, 1080 bis 1250 °C betragen. Die Temperaturangaben entsprechen einer in etwa unter Normaldruck (z. B. 800 - 1100, bevorzugt 900 - 1050 mbar) betriebenen Strömungsapparatur. Unter anderen Druckbedingungen kann ein Fachmann in Kenntnis der Erfindung die kinetischen und thermodynamischen Parameter insbesondere die notwendige Zündenergie entsprechend anpassen.

Die Zündenergie kann dem Brennofen extern thermisch, intern elektrisch oder intern mittels einer 02-betriebenen Flamme zugeführt werden.

Der Umsetzungsgrad der Reaktanden kann über 10, über 20, über 30, über 32, über 35 % betragen.

Die erzeugte thermische Energie wird bevorzugterweise einem Nutzverbraucher zugeführt. Nutzverbraucher können nahezu alle technischen und chemischen Energieumwandler sein. Insbesondere als Nutzverbraucher zu nennen sind Niederdruck- oder Hochdruckdampfturbinen zur Stromerzeugung oder Stirlingmotoren und andere Wärmekraftmaschinen oder direkte Stromerzeuger an Temperaturgradienten, Thermolyse-Reaktoren, insbesondere Reaktoren für die Wasserthermolyse zu Wasserstoff.

Das entstandene Kohlenmonoxid wird bevorzugterweise gespeichert oder einer chemischen Umsetzung zugeführt.

Die erzeugte Energie kann zur Energieumwandlung- oder Wärmeerzeugung, z. B. Heizwärmeerzeugung, abgeführt werden, indem sie gespeichert wird oder direkt oder indirekt verbraucht wird.

Die erzeugte Energie kann z. B. einer Niederdruck- oder bevorzugt einer Hochdruckdampfturbine zugeführt werden, um auf diese Weise Strom zu erzeugen.

Das Aluminium kann in Form von Aluminium-Pulver, Aluminium-Granulaten, Aluminium-Bändern, Aluminium-Draht oder Aluminium-Barren, bevorzugt durch kontinuierliche oder diskontinuierliche Reaktorzuführungen, gegebenenfalls unter Verwendung von Schleusen, eingesetzt werden.

Aluminium kann in Form in Form von Aluminium-Hohlkörpern eingesetzt werden, welche eine Dichte von weniger als 1g/cm³, z.B. von 0,8 bis 0,99 g/cm³ aufweisen.

Die Oxidation des Aluminiums in einer geschlossenen oder durchströmten Apparatur erfolgt besonders bevorzugt in einem Prozess-Reingasgemisch mit überwiegendem Kohlendioxidstrom.

Die Oxidation des Aluminiums erfolgt bevorzugt im Wesentlichen in Abwesenheit von Sauerstoffgas. In Wesentlichen bedeutet, dass der kontrollierte Zusatz von geringen Mengen Sauerstoffgas zwar nicht optimal, aber im Prinzip noch möglich ist, ohne die beschriebene Reaktion als solche zu beinträchtigen. Bessere Ergebnisse werden jedoch in Abwesenheit von Sauerstoffgas erzielt. Besonders bevorzugt erfolgt die Oxidation des Aluminiums deshalb in Abwesenheit von Sauerstoffgas.

Die Erfindung betrifft weiterhin einen Brennofen, umfassend eine Brennkammer, die mittels Zuführung von Zündenergie, zur Ausführung des erfindungsgemäßen Verfahrens geeignet ist.

Die Erfindung betrifft weiterhin ein Kraftwerk zur Energieerzeugung, umfassend einen Brennofen, Mittel zur Speicherung oder Umwandlung der durch den Brennofen erzeugten Energie und Mittel zur Speicherung oder unmittelbaren chemischen Verwertung von Kohlenmonoxid. Das Kraftwerk kann als Mittel zur Speicherung oder Umwandlung der durch den Brennofen erzeugten Energie mit einer Niederdruck - oder bevorzugt mit einer Hochdruckdampfturbine ausgestattet sein. Die im erfindungsgemäßen Verfahren erzeugte thermische Energie kann dann mittels der Niederdruck- oder bevorzugt der Hochdruckdampfturbine in Stromenergie umgewandelt werden.

Bei dem Kraftwerk kann es sich um ein mobiles Kraftwerk, eingesetzt im Fahrzeug-Schiffs- oder Schienenverkehr handeln

Das Kraftwerk kann miniaturisiert sein, d. h. es kann ein Volumen von weniger als einem Kubikmeter, weniger als 50%, weniger als 25%, weniger als 10% eines Kubikmeters oder weniger als einem Liter aufweisen.

Das Kraftwerk kann zur Stromerzeugung einen Temperaturgradienten, z. B. an einem Peltier-Element, nutzen.

Die Erfindung betrifft weiterhin ein Medium zur Erzeugung von thermischer Energie und Kohlenmonoxid (CO), bestehend aus einer sinnfälligen Herrichtung von Aluminium (Al) und Kohlendioxid (CO₂) in oder in der Umgebung eines Brennofens. Unter einer sinnfälligen Herrichtung ist eine Bereitstellung der Reaktionspartner zum Zwecke des Einsatzes im hier beschriebenen Verfahren zu verstehen.

Das Medium ist dadurch gekennzeichnet, dass es bevorzugt ohne Zufuhr von Sauerstoffgas durch Zuführung von Zündenergie zur Reaktion gebracht werden kann und zu Korund (Al₂O₃) und Kohlenmonooxid (CO) reagiert.

Das Medium ist weiterhin dadurch gekennzeichnet, dass sein Umsetzungsgrad beim Einsatz im hier beschriebenen Verfahren über 10, über 20, über 30, über 32, über 35 % beträgt.

Im Beispiel zeigen wir, dass die theoretisch erlaubte Reaktion auch real ist, industriell nutzbare Ausbeuten liefert und somit eine effiziente und thermische Energiequelle darstellt. Das für Eisenoxid beschriebene Verfahren der Metalloxidation wird hier mit den Reaktanden Al und CO₂ geführt was ein "Aufladen" auch im Sinne des Verfügbaren erfindungsgemäßen Mediums der Brutto-Ökonomie an jedem Ort der Welt erlaubt, die jeweils "normale" Verwendung (Konstruktionsmittel, Al, Automobil) unter bilanztechnischer Bindung und Nicht-Produktion vom Treibhausgas CO₂.

Die Erfindung betrifft somit auch die Verwendung von Aluminium zur Erzeugung thermischer Energie gemäß dem hier offenbarten Verfahren.

### Vorteilhafte Wirkungen der Erfindung

Der Rohstoff Aluminium steht als metallischer Rohstoff in industriellem Maßstab zur Verfügung und stellt eine Alternative zu anderen Energieträger dar. Aluminium ist inert und ungefährlich zu lagern und zu transportieren. Damit weist Aluminium als Energieträger einen wesentlichen Vorteil gegenüber Erdöl oder Kohle auf, die als wesentlich umweltgefährlicher anzusehen sind. Verwendet man für das Verfahren Aluminium-Hohlkörper, welche eine Dichte von weniger als 1g/cm³ aufweisen, somit weniger als Wasser, können diese auch im Falle eines Schiffstransportes und einer eventuellen Havarie aus dem Wasser gefischt werden, so dass eine Umweltbelastung durch auf den Meeresgrund gesunkenes Aluminium sogar vermieden wird.

Der Rohstoff Kohlendioxid kann aus dem Atmosphärengas gewonnen und so der Atmosphäre entzogen werden. Der Treibhauseffekt wird dadurch gemildert.

Das beanspruchte Verfahren hat somit den Vorteil, dass bei der damit verbundenen Energiegewinnung kein Kohlendioxid entsteht, sondern sogar verbraucht wird.

Das entstehende Reaktionsprodukt Korund ist innert und führt zu keiner Umweltbelastung.

Das entstehende Reaktionsprodukt Kohlenmonoxid ist zunächst ein für Mensch und Tier extrem gefährliches Gas. Die Gewinnung, Handhabung und Speicherung von gefährlichen Gasen wie z.B. Kohlenmonoxid ist jedoch seit langem und insbesondere nach den heutigen in der chemischen Industrie angewendeten Verfahrenstechniken unter Einhaltung von entsprechenden Sicherheitsstandards ohne weiteres möglich. Das Risikopotential von Kohlenmonoxid liegt somit auf dem Niveau anderer chemischer Gefahrenstoffe, was zumindest derzeit anders als z. B. die mit der Kernenergie einhergehenden Risiken, wissenschaftlich, gesellschaftlich und politisch weitgehend akzeptiert wird.

Der Vorteil des Reaktionsprodukts Kohlenmonoxid liegt insbesondere in seiner vielfältigen Verwendbarkeit in industriellen Prozessen. Anders als CO₂ kann Kohlenmonoxid (CO) direkt in vielen industriellen Prozessen zur Erzeugung von energiereichen Hydrocarbonverbindungen eingesetzt werden, wie z. B. bei der Gewinnung von Flugtreibstoffen wie Kerosin. Durch das sogenannte "Cracker-Sterben" verknappt sich das industriell zur Verfügung stehende Kohlenwasserstofftreibstoffe zunehmend, was lokal zu Engpässen und gegebenenfalls steigenden Preisen führt. Die vermehrte Anwendung des erfindungsgemäßen Energiegewinnungsverfahrens würde erneut Kohlenmonoxid für industrielle Zwecke bereitstellen. Die Verbrennung von Reaktionsprodukten des Kohlenmonoxids wie z. B. Kerosin erzeugt wiederum Kohlendioxid, das dem erfindungsgemäßen Verfahren zugeführt werden kann.

Der wesentliche Vorteil des erfindungsgemäßen Verfahrens besteht demnach in einer universell, dezentral und schnell anwendbaren Energieerzeugung, ohne dadurch verursachte zusätzliche CO2-Blastung der Umwelt, wobei das Reaktionsprodukt Kohlenmonoxid einem Stoffkreislauf zugeführt werden kann und mit dem ökonomischen Kreislauf-Medium Aluminium/Kohlendioxid kontrolliert verbunden wird.

### Beispiele

### Aluminothermische Reduktion von Kohlendioxid

### Problemstellung

Im Rahmen einer Machbarkeitsstudie soll das reduktive Verhalten von Aluminium gegenüber Kohlendioxid und die dabei entstehenden Reaktionsprodukte untersucht werden. Eine Bedingung für die Durchführung der aluminothermischen Reaktion sollte sein, dass diese in einer geschlossenen Apparatur im Kohlendioxidstrom erfolgt. Die bei der Reduktion des Kohlendioxids freiwerdenden Gase werden in einem PTFE-Gasbeutel aufgefangen und gaschromatographisch analysiert.

### Vorversuche

Um die Stärke der exothermen Reaktion besser einschätzen zu können, wurde zunächst reines Aluminium mit Luft verbrannt. Die Ergebnisse zeigen, dass Aluminiumgrieß (Aldrich Art. Nr. 11008-500 G) in einem aufgeschnittenem Quarzrohr an Luft nicht entzündet werden kann. Auch Aluminiumpulver (Acros Art. Nr. 200935000, 200 mesh) weist keine exotherme Reaktion auf. Selbst bei Verwendung von Magnesiumband als Zündhilfe wird die Flamme des brennenden Magnesiumbandes durch beide Substanzen erstickt. Lediglich in einem Gemisch bestehend aus Aluminiumpulver und Kaliumpermanganat (Verhältnis 2:1) brennt Aluminium selbständig unter stark exothermer Reaktion fast explosionsartig ab. Diese Reaktion kann in einem geschlossenen Gefäß nicht kontrolliert werden.

### Durchführung der aluminothermischen Reaktion mit Kohlendioxid

Die Versuchs- bzw. Reaktionsapparatur bestand aus einem Quarzrohr mit Keramikofen. Basierend auf den Ergebnissen der Vorversuche wurde versucht Aluminiumpulver (Acros Art. Nr. 200935000, 200 mesh) mit reinem Kohlendioxid (CO₂, GA 370) in einem speziell angefertigten Quarzrohr (Abmessungen: ca. 60 cm Länge 8 cm Durchmesser) unter kontrollierter Vorheizung in einem Keramikofen zu oxidieren. Hierzu wurde Kohlendioxid mit einer Strömungsgeschwindigkeit von ca. 100 ml / Minute über rotglühendes Aluminium geleitet, wobei in einer starken exothermen Reaktion eine partielle Selbstentzündung des Aluminiums auftrat, die auch ca. 15 Sekunden anhielt und anschließend erst bei augenscheinlicher Umsetzung des Aluminiums wieder erlosch. Die Brennrichtung verlief hierbei entgegengesetzt der Gasstromrichtung.

Während der Phase der Selbstentzündung wurde ein Aliquot des austretenden Gasstroms in einen PTFE-Gasbeutel (Grace PTFE sampling bag, Art. 8605719) aufgefangen und die qualitative und quantitative Zusammensetzung des Reaktionsgasgemisches anschließend gaschromatographisch analysiert.

Vergleichend hierzu wurde ein Aliquot des Gasstromes vor dem Aufheizen des Aluminiums als Blindwert entnommen und die Zusammensetzung ebenfalls gaschromatographisch (GC) analysiert.

In gleicher Weise erfolgte die Durchführung des Versuchs mit Aluminiumgrieß (Aldrich Art. Nr. 11008-500 G). Dieser zeigte im Vergleich zum Aluminiumpulver bei Normaldruck in diesem Aufbau keine Selbstentzündung bzw. keine aluminothermische Reaktion. Eine gaschromatographische Analyse der Verbrennungsgase wurde hierzu nicht durchgeführt.

### GC-Messparameter

| | |
|---|---|
| Stationäre Phase : | Molekularsieb 5Ǻ |
| Trägergas : | Helium 4.6, Messer Griesheim |
| Trägergasregelung: | flussgeregelt |
| Säulenfluss [ml/min]: | 20 |
| Injektortemperatur [°C]: | 150 |
| Detektortyp : | WLD |
| Detektortemperatur [°C] : | 150 |
| Ofentemperatur 1 [°C] : | 80 |
| Injektionsvolumen [µl] : | 250 |

### Ergebnis

In einer reinen Kohlendioxidatmosphäre kommt es bei Vorheizung von ca. 1100 °C (lokale Aussenmessung) zur partiellen Selbstentzündung des Aluminiumpulvers. In dem aufgefangenen Gasgemisch werden 39,1 % Kohlenmonoxid bestimmt.

## Patentansprüche

1. Verfahren zur Erzeugung von thermischer Energie und Kohlenmonoxid (CO) durch aluminothermische Reduktion von Kohlendioxid, **dadurch gekennzeichnet, dass** Aluminium (Al) und Kohlendioxid (CO₂) in einem Brennofen im Wesentlichen ohne Zufuhr von Sauerstoffgas durch Zuführung von Zündenergie zur Reaktion gebracht werden und zu Korund (Al₂O₃)und Kohlenmonoxid (CO) verbrannt werden.

2. Verfahren nach Anspruch 1, **dadurch gekennzeichnet, dass** die erzeugte thermische Energie einem Nutzverbraucher zugeführt wird und dass das entstandene Kohlenmonoxid gespeichert oder einer chemischen Umsetzung zugeführt wird.

3. Verfahren nach Anspruch 1 oder 2, **dadurch gekennzeichnet, dass** die stöchiometrischen Verhältnisse der Verbrennungsreaktion 4 Al + 6 CO₂ zu 2 Al₂O₃ + 6CO betragen.

4. Verfahren nach einem oder mehreren der Ansprüche 1 bis 3, **dadurch gekennzeichnet, dass** zumindest lokal die Zündenergie in Form von Wärme mit mindestens 600 °C zugeführt wird.

5. Verfahren nach Anspruch 4, **dadurch gekennzeichnet, dass** Zündenergie dem Brennofen extern thermisch, intern elektrisch oder intern mittels einer 02-betriebenen Flamme zugeführt wird.

6. Verfahren nach einem oder mehreren der Ansprüche 1 bis 5, **dadurch gekennzeichnet, dass** der Umsetzungsgrad der Reaktanden über 10 % beträgt.

7. Verfahren nach einem oder mehreren der Ansprüche 1 bis 6, **dadurch gekennzeichnet, dass** die erzeugte Energie zur Energieerzeugung abgeführt wird, indem sie gespeichert wird oder direkt oder indirekt verbraucht wird.

8. Verfahren nach einem oder mehreren der Ansprüche 1 bis 7, **dadurch gekennzeichnet, dass** man Aluminium in Form von Aluminium-Hohlkörpern einsetzt, welche eine Dichte von weniger als 1g/cm³ aufweisen.

9. Verfahren nach einem oder mehreren der Ansprüche 1 bis 8, **dadurch gekennzeichnet, dass** man Aluminium in Form von Aluminium-Pulver, Aluminium-Granulaten, Aluminium-Bändern, Aluminium-Draht oder Aluminium-Barren durch kontinuierliche oder diskontinuierliche Reaktorzuführungen oder Schleusen einsetzt.

10. Verfahren nach einem oder mehreren der Ansprüche 1 bis 9, **dadurch gekennzeichnet, dass** die Oxidation des Aluminiums in einer geschlossenen oder durchströmten Apparatur in einem Kohlendioxidstrom erfolgt..

11. Verfahren nach einem oder mehreren der Ansprüche 1 bis 10, **dadurch gekennzeichnet, dass** die Oxidation des Aluminiums in Abwesenheit von Sauerstoffgas erfolgt.

12. Brennofen umfassend eine Brennkammer zur Zuführung von Zündenergie, geeignet zur Ausführung des Verfahrens nach einem oder mehreren der Ansprüche 1 bis 11.

13. Kraftwerk zur Energieerzeugung nach dem Verfahren nach einem oder mehreren der Ansprüche 1 bis 11, umfassend einen Brennofen nach Anspruch 11, Mittel zur Speicherung oder Umwandlung der durch den Brennofen erzeugten Energie und Mittel zur Speicherung oder unmittelbaren chemischen Verwertung von Kohlenmonoxid.

14. Kraftwerk nach Anspruch 13, **dadurch gekennzeichnet, dass** es sich um ein mobiles Kraftwerk eingesetzt im Fahrzeug- Schiffs- oder Schienenverkehr handelt.

15. Kraftwerk nach Anspruch 13 oder 14, **dadurch gekennzeichnet, dass** es ein Volumen von weniger als einem Kubikmeter aufweist.

16. Kraftwerk nach einem oder mehreren der Ansprüche 13 bis 15, **dadurch gekennzeichnet, dass** es zur Stromerzeugung einen Temperaturgradienten nutzt.

17. Verwendung von Aluminium zur Erzeugung thermischer Energie gemäß einem Verfahren nach einem oder mehreren der Ansprüche 1 bis 11.

18. Medium zur Erzeugung von thermischer Energie und Kohlenmonoxid (CO), bestehend aus einer sinnfälligen Herrichtung von Aluminium (Al) und Kohlendioxid (CO₂) in oder in der Umgebung eines Brennofens.

19. Medium nach Anspruch 18, **dadurch gekennzeichnet, dass** es ohne Zufuhr von Sauerstoffgas durch Zuführung von Zündenergie zur Reaktion gebracht werden kann und zu Korund (Al₂O₃) und Kohlenmonooxid (CO) reagiert.

20. Medium nach Anspruch 18 oder 19, **dadurch gekennzeichnet, dass** sein Umsetzungsgrad über 10 % beträgt.
